(19) Europäisches Patentamt
European Patent Office
Office européen des brevets

(11) Veröffentlichungsnummer: **0 197 005**
**B1**

(12) **EUROPÄISCHE PATENTSCHRIFT**

(45) Veröffentlichungstag der Patentschrift: **04.01.89**

(51) Int. Cl.⁴: **C 08 G 65/32**, D 06 P 1/607, C 07 C 87/00

(21) Anmeldenummer: **86810132.0**

(22) Anmeldetag: **20.03.86**

(54) **Maleinsäure- oder Phthalsäurehalbester von alkoxylierten Fettaminen.**

(30) Priorität: **26.03.85 CH 1314/85**
**15.11.85 CH 4898/85**

(43) Veröffentlichungstag der Anmeldung: **08.10.86 Patentblatt 86/41**

(45) Bekanntmachung des Hinweises auf die Patenterteilung: **04.01.89 Patentblatt 89/1**

(84) Benannte Vertragsstaaten:
**BE CH DE FR GB IT LI**

(56) Entgegenhaltungen:
**EP-A-0 014 689**
**EP-A-0 074 923**
**EP-A-0 102 926**
**BE-A-686 619**
**DE-A-2 802 305**
**GB-A-888 661**

(73) Patentinhaber: **CIBA- GEIGY AG, Klybeckstrasse 141, CH- 4002 Basel (CH)**

(72) Erfinder: **Töpfl, Rosemarie, Dorneckstrasse 68, CH- 4143 Dornach (CH)**
Erfinder: **Abel, Heinz, Egertenstrasse 5, CH- 4153 Reinach (CH)**

**EP 0 197 005 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die vorliegende Erfindung betrifft Maleinsäure- oder Phthalsäurehalbester von alkoxylierten Fettaminen, die vorwiegend als Egalisiermittel verwendet werden.

Konventionelle für 1 : 2-Metallkomplexfarbstoffe übliche Wollegalisiermittel sind in der Regel für Reaktivfarbstoffe zu wenig wirksam. Andererseits führen die für Reaktivfarbstoffe üblichen Färbereihilfsmittel den 1 : 2-Metallkomplexfarbstoff zu Ausfällungen und/oder zu einem Drainingseffekt. Ferner haben beide genannten Färbereihilfsmittel noch den Nachteil störenden Schaum zu bilden, was durch den Zusatz von Antischaummitteln kompensiert werden muss.

Ziel und Aufgabenstellung der Erfindung bestehen darin, Egalisiermittel für das Färben von Wolle oder Fasergemischen aus Wolle und synthetischem Polyamid bereitzustellen, wobei diese Egalisiermittel kein störendes Schäumen bewirken und das gleichzeitige Färben mit üblichen Wollfarbstoffen zusammen mit wasserlöslichen Reaktivfarbstoffen ermöglichen.

Die erfindungsgemässen Säurehalbester entsprechen der Formel

(1) 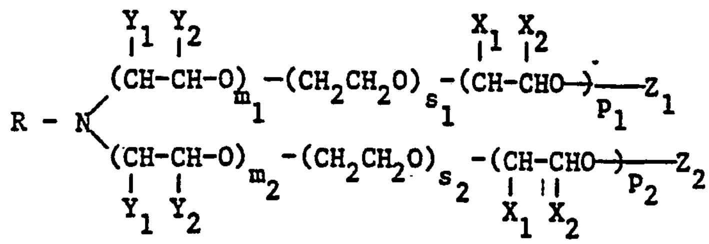

oder denen quaternaren Ammoniumverbindungen, worin

R einen aliphatischen Rest mit 12 bis 24 Kohlenstoffatomen, vorzugsweise 14 bis 24 Kohlenstoffatomen,
von $Y_1$ und $Y_2$ eines Wasserstoff und das andere Phenyl,
von $X_1$ und $X_2$ eines Wasserstoff und das andere Methyl,
von $Z_1$ und $Z_2$ eines Wasserstoff und das andere den Maleinsäurerest oder den Phthalsäurerest,
$m_1$ und $m_2$ 0 oder 1 und
$s_1$, $s_2$, $p_1$ und $p_2$ ganze Zahlen bedeuten,
wobei die Summe von $s_1 + s_2$ 25 bis 50, vorzugsweise 30 bis 40 und die Summe von $p_1 + p_2$ 4 bis 15, vorzugsweise 5 bis 10, betragen.

Dabei sind die Maleinsäurehalbester bevorzugt.

In der Formel (1) bedeutet R vorzugsweise einen Alkyl- oder Alkenylrest mit 12 bis 24 Kohlenstoffatomen, besonders 16 bis 24 Kohlenstoffatomen und vor allem den Behenylrest. Diese Kohlenwasserstoffreste sind direkt gebunden. Sie können jedoch auch über eine $-O-CH_2$-Gruppe an die Aminogruppe gebunden sein. $m_1$ und $m_2$ sind vorzugsweise beide 0 oder nur eines von $m_1$ und $m_2$ ist 1. Die Summe von $s_1 + s_2$ ist vorzugsweise 30 bis 40 und vor allem 30 bis 34 während die Summe von $p_1 + p_2$ vorzugsweise 6 bis 12 und insbesondere 6 bis 10 ist. Der Maleinsäurerest oder Phthalsäurerest ist über eine Esterbrücke -CO-O- mit der endständigen Propoxyeinheit gebunden. Die zweite Carboxylgruppe kann in freier Form oder in Salzform z. B. Alkalimetall-, Ammonium- oder Aminsalz vorliegen.

Bedeutet R Alkyl, so handelt es sich um Reste wie z. B. Dodecyl, Myristyl, Hexadecyl, Heptadecyl, Octadecyl, Arachidyl oder vor allem Behenyl. Als Alkenylreste für R kommen z. B. Dodecenyl, Hexadecenyl, Octadecenyl(Oleyl) oder Octadecadienyl in Betracht. Dabei kann R auch der Kohlenwasserstoffrest der Soja-Fettsäuren Palmkernfettsäuren oder Talgfettöle sein.

Die Herstellung der erfindungsgemässen Säureester erfolgt nach an sich bekannten Methoden durch Veresterung an einer endständigen Gruppe der Formel

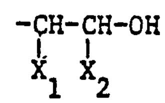

des definitionsgemässen alkoxylierten Fettamins oder dessen N-quaternisierten Produktes mit einem funktionellen Maleinsäure- oder Phthalsäurederivat, wie z. B. Maleinsäureanhydrid bzw. Phthalsäureanhydrid. Bei quaternären Ammoniumsalzen kann die Veresterung auch vor der Quaternisierung erfolgen. Dabei können auch geringe Teile der unveresterten und/oder der diveresterten alkoxylierten Fettamine im Endprodukt vorhanden sein.

Die alkoxylierten Fettamine werden dadurch hergestellt, dass man die aliphatischen Amine, deren Alkyl- oder Alkenylreste vorzugsweise 12 bis 24 Kohlenstoffatome aufweisen, alternierend mit 25 bis 50 Mol Ethylenoxid und 4 bis 15 Mol Propylenoxid oder mit 1 bis 2 Mol Styroloxid, 25 bis 50 Mol Ethylenoxid und 4 bis 15 Mol Propylenoxid umsetzt.

Gewünschtenfalls können diese Umsetzungsprodukte mit üblichen Quaternierungsmitteln, wie z. B. $C_1$-$C_4$-Alkylhalogeniden, Benzylhalogeniden, Di-$C_1$-$C_4$-Alkylsulphaten, aromatischen Sulfonsäureestern,

Halogenhydrinen, Epihalogenhydrinen oder Halogencarbonsäureamiden, wie z. B. Chloracetamid quaternisiert werden. Bevorzugte Quaternisierungsmittel sind Dimethylsulfat oder Benzylchlorid. Sowohl die Quaternisierung als auch die Mono-Veresterung werden zweckmässig durch einfaches Vermischen der Reaktionskomponenten, vorzugsweise bei einer Temperatur von 50 bis 100°C durchgeführt.

Die aliphatischen Amine, die als Ausgangsstoffe für die Herstellung der Säurehalbester der Formel (1) benötigt werden, können gesättigte oder ungesättigte, verzweigte oder unverzweigte Kohlenwasserstoffreste aufweisen. Die Amine können chemisch einheitlich sein oder in Form von Gemischen in Betracht kommen. Als Amingemische werden vorzugsweise solche herangezogen, wie sie bei der Überführung von natürlichen Fetten oder Ölen, z. B. Talgfett, Sojaöl oder Kokosöl, in die entsprechenden Amine entstehen. Als Amine seien im einzelnen Dodecylamin, Hexadecylamin, Heptadecylamin, Octadecylamin, Talgfettamin, Arachidylamin, Behenylamin, Lignocerylamin, Octadecenylamin (Oleylamin) und Erucylamin sowie Gemische dieser Amine, wie z. B. Gemische aus Behenylamin und Arachidylamin, genannt.

Bevorzugt sind Säurehalbester der Formel

(2)

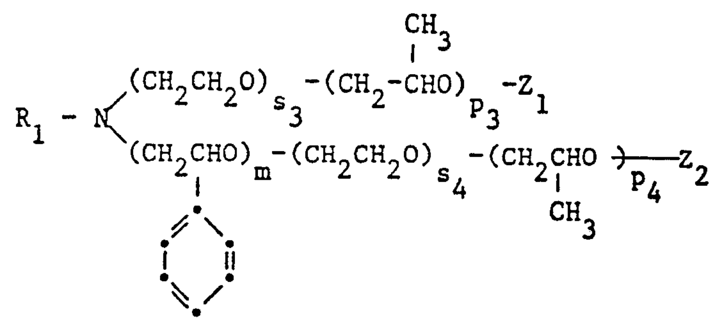

oder entsprechende quaternäre Ammoniumverbindungen der Formel

(3)

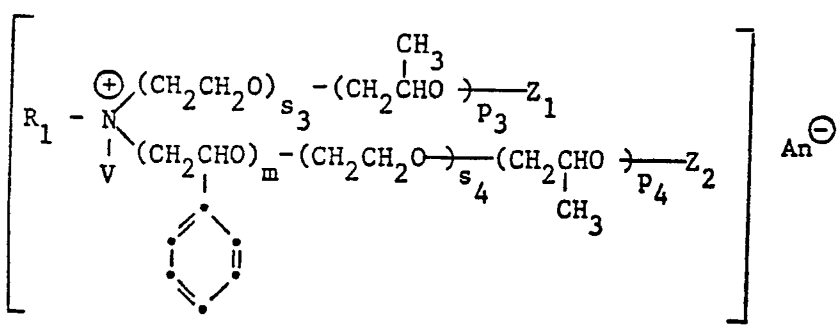

worin

$R_1$ Alkyl oder Alkenyl je mit 16 bis 24 Kohlenstoffatomen, vorzugsweise Behenyl,

V Alkyl mit 1 bis 4 Kohlenstoffatomen, Hydroxyalkyl mit 2 bis 4 Kohlenstoffatomen, Carbamoylmethyl oder Benzyl, vorzugsweise Methyl oder Benzyl,

von $Z_1$ und $Z_2$ eines Wasserstoff und das andere den Maleinsäurerest oder den Phthalsäurerest,

$An^{\ominus}$ das Anion einer anorganischen oder organischen Säure, insbesondere einer starken Mineralsäure oder organischen Säure, wie z. B. das Chlorid-, Bromid-, Sulfat-, Benzolsulfonat-, p-Tuluolsulfonat-, Methosulfat-, Ethosulfat- oder Methophosphation,

m 0 oder 1 und $s_3$, $s_4$, $p_3$ und $p_4$ ganze Zahlen bedeuten, wobei die Summe von $s_3 + s_4$ 30 bis 40 und die Summe von $p_3 + p_4$ 5 bis 12 betragen.

Anionen sind in diesem Fall bevorzugt Chloridion ($Cl^{\ominus}$) oder Methylsulfation ($CH_3SO_4^{\ominus}$).

Unter den Halbsäureestern der Formeln (2) und (3) sind die Maleinsäurehalbester bevorzugt.

Die neuen Säurehalbester eignen sich für die verschiedensten Zwecke in der Textilapplikation. Insbesondere finden sie Verwendung als Hilfsmittel beim Färben von wollhaltigen Fasermaterialien mit anionischen Farbstoffen oder Farbstoffgemischen.

Gegenstand vorliegender Erfindung ist demnach auch ein Verfahren zum Färben von wollhaltigem Fasermaterial mit anionischen Farbstoffen, welches dadurch gekennzeichnet ist, dass man dieses Material vor oder während des Färbens mit einer Zubereitung behandelt, welche einen Säurehalbester der Formel (1) oder ein Quaternisierungsprodukt davon und insbesondere die Verbindungen der Formeln (2) und (3) enthält.

Die Einsatzmengen, in denen die Säurehalbester der Formel (1) oder deren quaternierte Produkte den Färbebädern zugesetzt werden, bewegen sich zweckmässigerweise von 0,1 bis 3 Gew.-%, vorzugsweise 0,2 oder 0,3 bis 2 Gew.-%, bezogen auf das zu färbende Wollmaterial.

Als wollhaltiges Fasermaterial sind Wolle allein oder Mischungen aus Wolle/Polyester oder insbesondere

Wolle/Polyamid zu erwähnen. Als synthetisches Polyamid kommt z. B. solches aus Adipinsäure und Hexamethylendiamin (Polyamid 6,6), aus ε-Caprolactam (Polyamid 6), aus ω-Aminoundecansäure (Polyamid 11), aus ω-Aminoönanthsäure (Polyamid 7), aus ω-Aminopelargonsäure (Polyamid 8) oder aus Sebacinsäure und Hexamethylendiamin (Polyamid 6, 10) in Betracht.

Das Fasermaterial kann in den verschiedensten Verarbeitungsstadien vorliegen. Beispielsweise kommen in Betracht: Flocke, Kammzug, Gewebe, Gewirke, Vliesstoffe, Garn oder Stückware.

Bei den anionischen Farbstoffen handelt es sich beispielsweise um Salze schwermetallhaltiger oder metallfreier Mono-, Dis- oder Polyazofarbstoffe einschliesslich der Formazanfarbstoffe sowie der Anthrachinon-, Xanthen-, Nitro-, Triphenylmethan-, Naphthochinonimin- und Phthalocyaninfarbstoffe. Der anionische Charakter dieser Farbstoffe kann durch Metallkomplexbildung allein und/oder vorzugsweise durch saure, salzbildende Substituenten, wie Carbonsäuregruppen, Schwefelsäure- und Phosphonsäureestergruppen, Phosphonsäuregruppen oder Sulfonsäuregruppen bedingt sein. Diese Farbstoffe können im Molekül auch sogenannte reaktive Gruppierungen, welche mit dem zu färbenden Material eine kovalente Bindung eingehen, aufweisen. Bevorzugt sind saure metallfreie Reaktivfarbstoffe, welche vorzugsweise mindestens zwei Sulfonsäuregruppen aufweisen.

Von besonderem Interesse sind auch die 1 : 1- oder vorzugsweise 1:2-Metallkomplexfarbstoffe. Die 1 : 1-Metallkomplexfarbstoffe weisen vorzugsweise eine oder zwei Sulfonsäuregruppen auf. Als Metall enthalten sie ein Schwermetallatom, wie z. B. Kupfer, Nickel oder insbesondere Chrom. Die 1 : 2-Metallkomplexfarbstoffe enthalten als Zentralatom ein Schwermetallatom, wie z. B. ein Kobaltatom oder insbesondere ein Chromatom. Mit dem Zentralatom sind zwei komplexbildende Komponenten verbunden, von denen mindestens eine ein Farbstoffmolekül ist, vorzugsweise jedoch beide Farbstoffmolküle sind. Dabei können die beiden an der Komplexbildung beteiligten Farbstoffmoleküle gleich oder voneinander verschieden sein. Die 1 : 2-Metallkomplexfarbstoffe können z. B. zwei Azomethinmoleküle, einen Disazofarbstoff und einen Monoazofarbstoff oder vorzugsweise zwei Monoazofarbstoffmoleküle enthalten. Die Azofarbstoffmoleküle können wasserlöslichmachende Gruppen aufweisen, wie z. B. Säureamid-, Alkylsulfonyl- oder die obengenannten sauren Gruppen. Bevorzugt sind 1 : 2-Kobalt- oder 1 : 2-Chromkomplexe von Monoazofarbstoffen, die Säureamidgruppen, Alkylsulfonylgruppen oder insgesamt eine einzige Sulfonsäuregruppe aufweisen.

Von besonderem Interesse sind 1 : 2-Chrommischkomplexe von Azofarbstoffen worin die Komplexe nur eine Sulfonsäuregruppe aufweisen.

Es können auch Mischungen der anionischen Farbstoffe eingesetzt werden. Beispielsweise können Farbstoffmischungen von mindestens 2 oder 3 anionischen Farbstoffen zur Herstellung egaler Bichromie- oder Trichromiefärbungen verwendet werden. Besonders bevorzugt sind Farbstoffmischungen, welche einen Reaktivfarbstoff mit mindestens zwei Sulfonsäuregruppen und einen 1 : 2-Metallkomplexfarbstoff enthalten. Das Mischungsverhältnis kann von 9 : 1 bis 1 : 9 variieren.

Die Menge der der Flotte zugesetzten Farbstoffe richtet sich nach der gewünschten Farbtiefe. Im allgemeinen haben sich Mengen von 0,1 bis 10, insbesondere 0,1 bis 5 Gewichtsprozent, bezogen auf das eingesetzte Fasermaterial, bewährt.

Die Färbebäder können Mineralsäuren, wie Schwefelsäure oder Phosphorsäure, organische Säuren, zweckmässig niedere, aliphatische Carbonsäuren, wie Ameisen-, Essig- oder Oxalsäure und/oder Salze, wie Ammoniumacetat, Ammoniumsulfat oder Natriumacetat enthalten. Die Säuren dienen vor allem der Einstellung des pH-Wertes der Flotten, der in der Regel 4 bis 7, vorzugsweise 5 bis 6, beträgt. Sofern die erfindungsgemässen Säurehalbester vor dem Färben appliziert werden, soll die Säure oder das Puffergemisch zweckmässig der Vorbehandlungsflotte zugesetzt werden.

Bei Verwendung von Reaktivfarbstoffen werden den Färbeflotten nachträglich in der Regel Fixieralkalien, wie z. B. wässeriges Ammoniak, Alkalimetallhydroxide, Alkalimetallcarbonate oder -hydrogencarbonate zugegeben. Der pH-Wert der Alkali enthaltenden Färbebäder beträgt in der Regel 7,5 bis 9, vorzugsweise 8 bis 8,5.

Die Färbebäder können weitere übliche Zusätze, wie z. B. Elektrolyte, Wollschutz-, Dispergier- und Netzmittel enthalten. Entschäumer, wie z. B. Silikonöle, werden hingegen nicht benötigt.

Vorzugsweise enthalten die Färbebäder oder Vorbehandlungsflotten neben den erfindungsgemässen amphoteren Maleinsäurehalbestern oder Phthalsäurehalbestern Hydrotropierungskomponenten. Bei diesen Zusätzen handelt es sich vorzugsweise um nichtionogene Tenside, welche bevorzugt Anlagerungsprodukte von 30 bis 200, vorzugsweise 30 bis 100 Mol Ethylenoxid an 1 Mol eines Alkylphenols mit 4 bis 12 Kohlenstoffatomen im Alkylteil oder vorzugweise eines aliphatischen Monoalkohols mit 12 bis 22 Kohlenstoffatomen sind. Typische Vertreter dieser Tenside sind das Anlagerungsprodukt von 80 Mol Ethylenoxid an 1 Mol Oleylalkohol, das Anlagerungsprodukt von 35 Mol Ethylenoxid an 1 Mol Sojaöl, das Anlagerungsprodukt von 200 Mol Ethylenoxid an 1 Mol Hydroabietylalkohol oder das Anlagerungsprodukt von 35 Mol Ethylenoxid an 1 Mol Nonylphenol. Das Gewichtsverhältnis des Säurehalbesters zu diesen Addukten bewegt sich mit Vorteil zwischen 2 : 1 oder 1 : 1 bis 1 : 4, vorzugsweise 1 : 1 bis 1 : 2.

Die Färbungen erfolgen mit Vorteil aus wässeriger Flotte nach dem Ausziehverfahren. Das Flottenverhältnis kann dementsprechend innerhalb eines weiten Bereiches gewählt werden, z. B. 1 : 3 bis 1 : 100, vorzugsweise 1: 10 bis 1 : 50. Man färbt zweckmässig bei einer Temperatur von 60 bis 125°C, vorzugsweise 80 bis 98°C. Die Färbedauer kann in Abhängigkeit von den Erfordernissen variieren, beträgt jedoch in der Regel 30 bis 120 Minuten.

Besondere Vorrichtungen sind beim erfindungsgemässen Verfahren nicht erforderlich. Es können die üblichen Färbeapparate, wie beispielsweise offene Bäder, Jigger, Paddel- oder Düsenapparate, Zirkulationsapparate oder Haspelkufen verwendet werden.

Das Färben des Fasermaterials wird zweckmässig so durchgeführt, dass man das Färbegut mit einer wässerigen Flotte, die Säure und den Säurehalbester, vorzugsweise den Maleinsäurehalbester enthält, behandelt und im gleichen Bade nach Zugabe des Farbstoffes färbt. Vorzugsweise geht man mit dem wollhaltigen Fasermaterial in eine Flotte ein, die Säure, den Maleinsäurehalbester und Farbstoff bzw. Farbstoffmischungen enthält und eine Temperatur von 40 bis 60°C aufweist. Hierauf steigert man die Temperatur langsam, um im angegebenen Temperaturbereich von 15 bis 90 Minuten, vorzugsweise 30 bis 60 Minuten, zu färben. Bei Verwendung von Reaktivfarbstoffen wird das Färbegut noch 10 bis 20 Minuten alkalisch bei 70 bis 90°C behandelt. Am Schluss wird das gefärbte Material herausgezogen und wie üblich gespült und getrocknet.

Durch die Anwesenheit des erfindungsgemässen Maleinsäurehalbesters oder Phthalsäurehalbesters tritt während des Färbeprozesses kein störendes Schäumen auf.

Man erhält nach dem erfindungsgemässen Färbeverfahren gleichmässige und farbkräftige Färbungen, die sich auch durch gute Reibechtheiten und Farbausbeuten auszeichnen. Zudem werden die anderen Echtheiten der Färbungen, wie z. B. Lichtechtheit und Nassechtheiten durch den Einsatz des neuen Säurehalbesters allein oder in Kombination mit Hydrotropierungskomponenten nicht negativ beeinflusst. Ferner wird eine vollständige Erschöpfung des Färbebades ohne Farbstoffausfällungen erreicht. Eine Spülung vor dem Trocknen des Materials ist zudem nicht immer erforderlich.

In den nachfolgenden Beispielen sind die Teile Gewichtsteile und die Prozente Gewichtsprozente.

**Herstellungsbeispiele**

**Beispiel 1:**

9,8 g Maleinsäureanhydrid und 0,1 g Tributylamin werden zu 177 g eines Anlagerungsproduktes von 34 Mol Ethylenoxid und 6 Mol Propylenoxid an 1 Mol Behenylamin zugegeben, worauf das Gemisch 6 Stunden bei 100°C gerührt wird. Danach wird die Säurezahl (SZ = 23) bestimmt und das Reaktionsprodukt mit 186 g Wasser verdünnt.

Man erhält 372 g einer braunen viskosen Lösung, die 50 % des Maleinsäurehalbesters der Formel ,

(11) 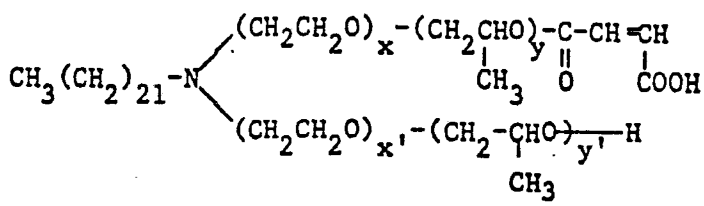

enthält, worin x + x' = 34 und y + y' = 6 sind. Das Produkt ist mit Wasser unbegrenzt mischbar.

**Beispiel 2:**

Man verfährt wie in Beispiel 1 beschrieben, lässt aber nach der Säurezahl-Bestimmung 12,65 g Benzylchlorid zutropfen. Alsdann rührt man weitere 8 Stunden bei 100°C und bestimmt die Aminzahl (AZ = 0,1). Anschliessend verdünnt man das Reaktionsprodukt mit 199 g Wasser. Man erhält 398 g einer braunen, viskosen Lösung, die 50 % des Maleinsäurehalbesters der Formel

(12) 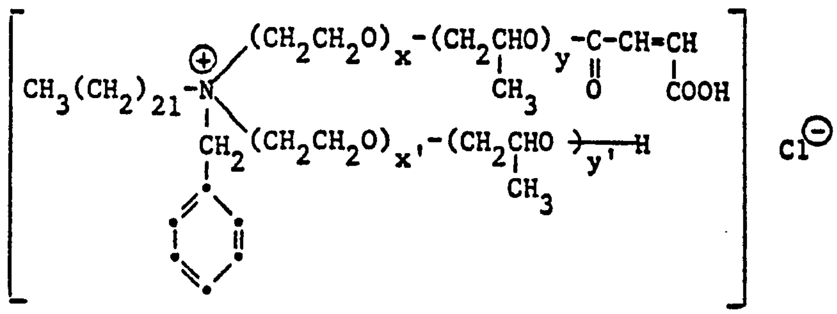

enthält, worin x + x' = 34 und y + y' = 6 sind.

**Beispiel 3:**

9,8 g Maleinsäureanhydrid und 0,1 g Tributylamin werden zu 227 g eines Umsetzungsproduktes aus 1 Mol Behenylamin, 1 Mol Styroloxid, 34 Mol Ethylenoxid und 6 Mol Propylenoxid zugegeben, worauf das Gemisch 6 Stunden bei 100°C gerührt wird. Danach wird die Säurezahl (SZ = 22) bestimmt und das Produkt mit 236 g Wasser verdünnt. Man erhält 472 g einer braunen, viskosen Lösung, die 50 % des Maleinsäurehalbesters der Formel

(13) 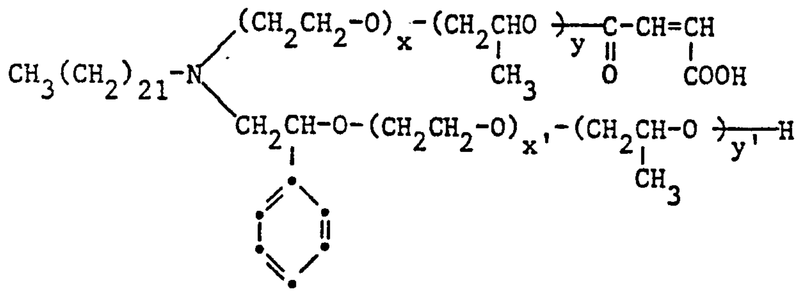

enthält, worin x + x' = 34 und y + y' = 6 sind. Das Produkt ist mit Wasser unbegrenzt mischbar.

**Beispiel 4:**

14,8 g Phthalsäureanhydrid und 0,18 g Tributylamin werden zu 178 g eines Umsetzungsproduktes aus 1 Mol Behenylamin, 34 Mol Ethylenoxyd und 6 Mol Propylenoxyd gegeben und das Gemisch 6 Stunden bei 100°C gerührt. Danach wird die Säurezahl (SZ = 23) bestimmt und das Produkt mit 193 g Wasser verdünnt. Man erhält 385 g einer braunen, viskosen Lösung, die 50 % des Phthalsäurehalbesters der Formel

(14) 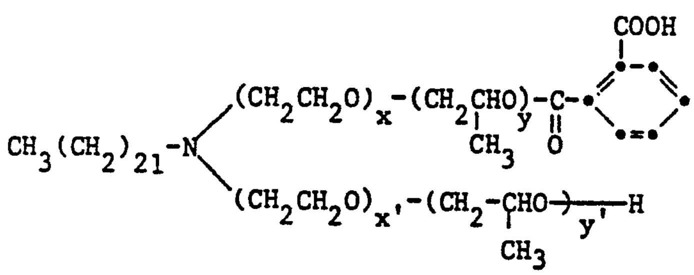

enthält, worin x + x' = 34 und y + y' = 6 sind. Der pH Wert beträgt 5,2.

**Beispiel 5:**

14,8 g Phthalsäureanhydrid und 0,18 g Tributylamin werden zu 219,7 g eines Umsetzungsproduktes aus 1 Mol Behenylamin, 34 Mol Ethylenoxyd und 10 Mol Propylenoxid gegeben und das Gemisch 6 Stunden bei 100°C gerührt. Danach wird die Säurezahl (SZ = 24) bestimmt und das Produkt mit 234 g Wasser verdünnt. Man erhält 468 g einer braunen, viskosen Lösung, die 50 % des Phthalsäurehalbesters der Formel

(15)

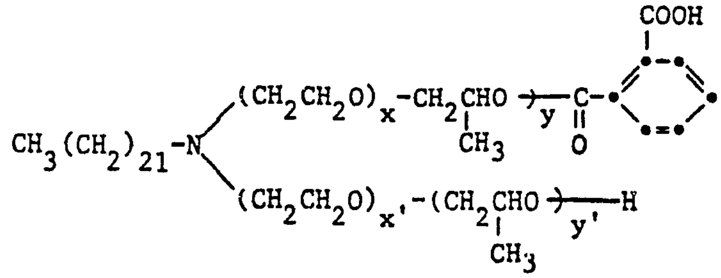

enthält worin x + x' = 34 und y + y' = 10 sind. Der pH Wert beträgt 5,5.

**Beispiel 6:**

22,2 g Phthalsäureanhydrid und 0,3 g Tributylamin werden zu 306 g eines Umsetzungsproduktes aus 1 Mol Behenylamin, 1 Mol Styroloxyd, 30 Mol Ethylenoxyd und 6 Mol Propylenoxyd gegeben und das Gemisch 6 Stunden bei 100°C gerührt. Danach wird die Säurezahl (SZ = 23) bestimmt und das Produkt mit 328 g Wasser verdünnt.

Man erhält 656 g einer braunen, stark viskosen Lösung, die 50 % des Phthalsäurehalbesters der Formel

(16)

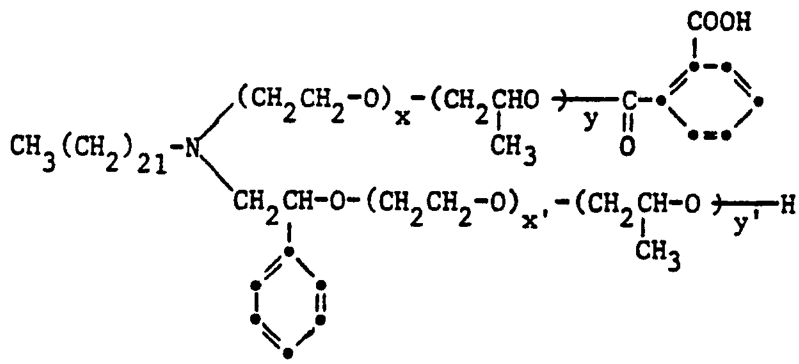

enthält, worin x + x' = 30 und y + y' = 6 sind. Der pH Wert beträgt 5,0.

**Beispiel 7:**

12,25 g Maleinsäureanhydrid und 0,13 g Tributylamin werden zu 272 g eines Umsetzungsproduktes aus 1 Mol Behenylamin, 34 Mol Ethylenoxid und 8 Mol Propylenoxid gegeben, worauf das Gemisch 6 Stunden bei 100°C gerührt wird. Danach wird die Säurezahl (SZ = 20) bestimmt und das Produkt mit 284 g Wasser verdünnt. Man erhält 568 g eines braunen, viskosen Produktes, das 50 % Maleinsäurehalbester der Formel

(17)

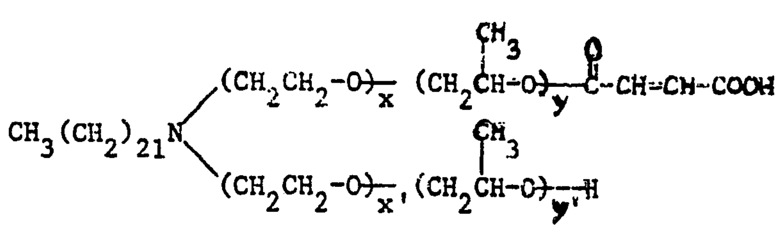

enthält, worin x + x' = 34 und y + y' = 8 sind. Der pH-Wert beträgt: 6,3.

**Beispiel 8:**

Man verfährt wie in Beispiel 7 beschrieben lässt aber nach der Säurezahl-Bestimmung 15,75 g Benzylchlorid zutropfen.

Danach rührt man weitere 8 Stunden bei 100° C und bestimmt die Aminzahl (0.13).

Anschliessend verdünnt man das Reaktionsprodukt mit 299 g Wasser. Man erhält 598 g eines braunen, viskosen Produktes, das 50 % Maleinsäurehalbester der Formel

(18) 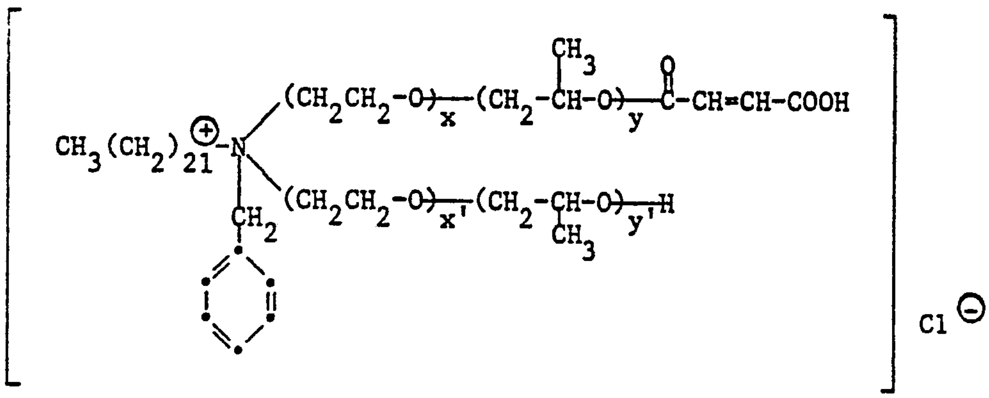

enthält, worin x + x' = 34 und y + y' = 8 sind. Der pH-Wert beträgt: 4,6.

**Beispiel 9:**

12,25 g maleinsäurreanhydrid und 0,13 g Tributylamin werden zu 285 g eines Umsetzungsproduktes aus 1 Mol Behenylamin, 34 Mol Ethylenoxid und 10 Mol Propylenoxid gegeben, worauf des Gemisch 6 Stunden bei 100° C gerührt wird. Danach wird die Säurezahl (SZ = 20) bestimmt und das Produkt mit 297 g Wasser verdünnt. Man erhält 594 g eines braunen, viskosen Produktes, das 50 % Maleinsäurehalbester der Formel

(19) 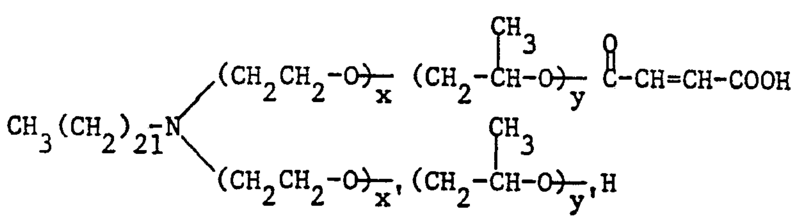

enthält, worin x + x' = 34 und y + y' = 10 sind. Der pH-Wert beträgt: 6,3.

**Beispiel 10:**

Man verfährt wie in Beispiel 9 beschrieben, lässt aber nach der Säurezahl-Bestimmung 16,4 g Benzylchlorid zutropfen. Danach rührt man weitere 8 Stunden bei 100° C und bestimmt die Aminzahl (AZ: -). Anschliessend verdünnt man mit 313 g Wasser. Man erhält 626 g eines braunen, viskosen Produktes, das 50 % Maleinsäurehalbester der Formel

(20) 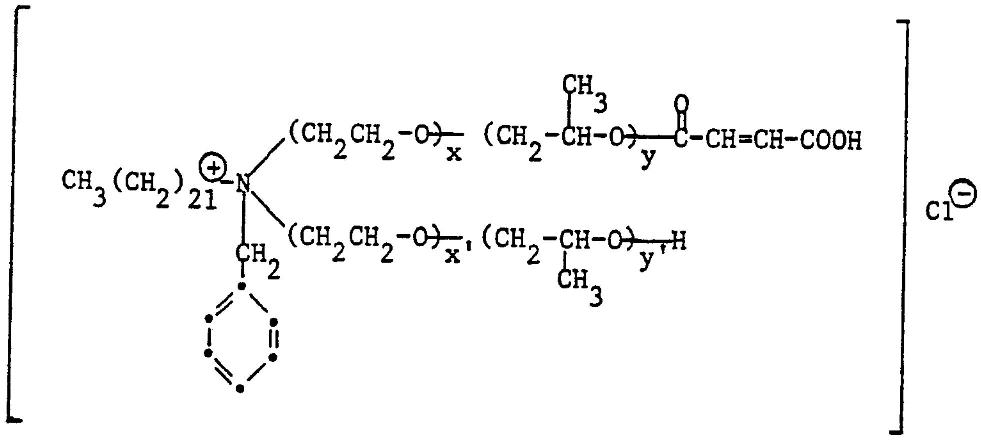

enthält, worin x + x' = 34 und y + y' = 10 sind. Der pH-Wert beträgt: 4,7.

**Beispiel 11:**

12,25 g Maleinsäureanhydrid und 0,13 g Tributylamin werden zu 310 g eines Umsetzungsproduktes aus 1 Mol Behenylamin, 34 Mol Ethylenoxid und 12 Mol Propylenoxid gegeben, worauf das Gemisch 6 Stunden bei 100°C gerührt wird. Danach wird die Säurezahl bestimmt (SZ = 18) und das Produkt mit 322 g Wasser verdünnt. Man erhält 644 g eines braunen, viskosen Produktes, das 50 % Maleinsäurehalbester der Formel

(21) 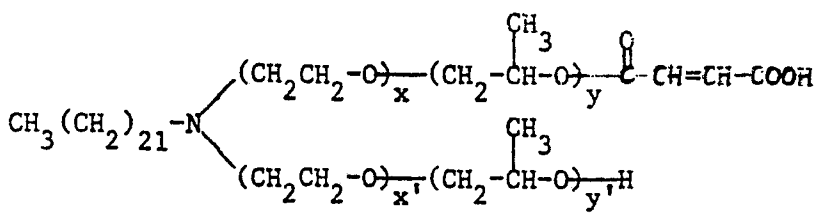

enthält, worin x + x' = 34 und y + y' = 12 sind. Der pH-Wert beträgt: 6,9.

**Anwendungsbeispiele**

**Beispiel 1:**

100 kg Wollgewebe werden auf einer Haspelkufe mit einer Flotte aus 4000 Liter Wasser von 40°C eingenetzt, welche folgende Zusätze enthält:

| | |
|---|---|
| 4 kg | Ammoniumsulfat |
| 2 kg | Essigsäure 80 % |
| 1,5 kg | einer wässrigen Zubereitung, welche 25 % des gemäss Beispiel 1 hergestellten Maleinsäurehalbesters der Formel (11) und 37,5 % des Anlagerungsproduktes von 80 Mol Ethylenoxid an 1 Mol Oleylalkohol enthält. |

Alsdann erfolgt der Zusatz einer wässerigen Lösung von 3 kg des Farbstoffes der Formel

(21)

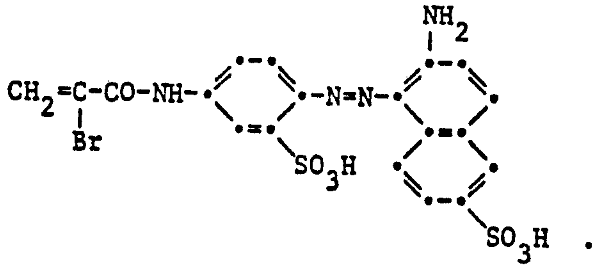

Hierauf wird die Färbeflotte im Verlauf von 30 Minuten auf Kochtemperatur erwärmt und die Ware 60 Minuten bei dieser Temperatur gehalten.

Während des ganzen Färbeprozesses tritt kein störendes Schäumen auf. Anschliessend wird das Färbebad auf 80° C abgekühlt und der pH-Wert mit Ammoniakwasser auf 8,5 eingestellt. Nach einer Behandlungszeit von 15 Minuten bei 80° C wird die Ware gespült und getrocknet. Man erhält eine egale rote Färbung des Wollgewebes, das keine Flecken aufweist.

**Beispiel 2:**

100 kg Woll-Stranggarn werden in einem Zirkulationsapparat bei 40° C mit einer Flotte aus 1000 Liter Wasser eingenetzt, welche folgende Zusätze enthält:

| | |
|---|---|
| 1 kg | Natriumacetat |
| 3 kg | Essigsäure 80 % |
| 5 kg | Natriumsulfat |
| 1 kg | einer wässerigen Zubereitung, welche 25 % des gemäss Beispiel 1 hergestellten Maleinsäurehalbesters der Formel (11) und 37,5 % des Anlagerungsproduktes von 80 Mol Ethylenoxid an 1 Mol Oleylalkohol enthält. |

Alsdann werden 3 kg eines Gemisches bestehend aus einem Farbstoff der Formel

(22)

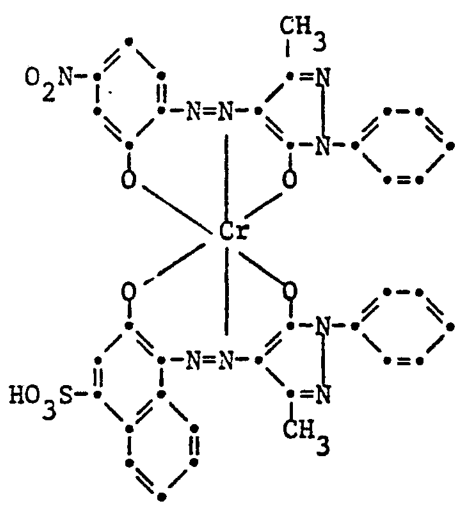

und einem 1 : 2-Kobaltkomplex des Farbstoffes der Formel

(23) 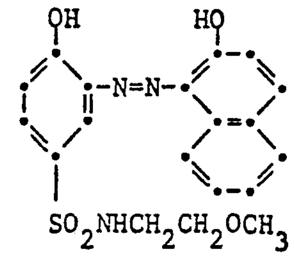

im Mischungsverhältnis 7 : 1 zugegeben.

Das Färbebad wird danach in Verlaufe von 45 Minuten auf Kochtemperatur erhitzt und das Färbegut 60 Minuten bei dieser Temperatur gehalten. Während des Färbeprozesses tritt kein störendes Schäumen auf. Alsdann wird das Färbegut gespült und getrocknet. Man erhält eine egale und echte bordeaux Färbung des Wollgarnes.

**Beispiel 3:**

100 kg Wollserge werden in einer Haspelkufe bei 40°C in 5000 Litern Wasser eingenetzt. Hierauf werden folgende Zusätze zugegeben:

| | |
|---|---|
| 4 kg | Ammoniumsulfat |
| 3 kg | Essigsäure 80 % |
| 1,5 kg | einer wässrigen Zubereitung, welche 25 % des gemäss Beispiel 1 hergestellten Maleinsäurehalbesters der Formel (11) und 37,5 % des Anlagerungsproduktes von 80 Mol Ethylenoxid an 1 Mol Oleylalkohol enthält, |
| 3 kg | des Farbstoffes der Formel (21) und |
| 1 kg | des Farbstoffegemisches gemäss Beispiel 2, |

bestehend aus dem 1 : 2-Chrommischkomplex-Farbstoff der Formel (22) und dem 1 : 2-Kobaltkomplex des Farbstoffes der Formel (23). Hierauf wird die Färbeflotte im Verlauf von 30 Minuten auf Kochtemperatur erwärmt und die Ware 60 Minuten bei dieser Temperatur gehalten.

Während des ganzen Färbeprozesses tritt kein störendes Schäumen auf. Anschliessend wird das Färbebad auf 80°C abgekühlt und der pH-Wert mit Ammoniakwasser auf pH 8,5 eingestellt. Nach einer Behandlungszeit von 15 Minuten bei 80°C wird die Ware gespült und getrocknet. Man erhält eine egale und reibechte Färbung bei ausgezeichneter Baderschöpfung.

Ähnliche gute Ergebnisse werden erhalten, wenn in den Anwendungsbeispielen 1, 2 und 3 anstelle des dort verwendeten Maleinsäurehalbesters der Formeln (11) die gleiche Menge eines der gemäss den Beispielen 2 bis 6 hergestellten Säurehalbester der Formeln (12) bis (16) eingesetzt wird.

**Beispiel 4**

100 kg Wollgewebe werden auf einer Haspelkufe mit einer Färbeflotte gefärbt, welche in 4000 Liter Wasser

| | |
|---|---|
| 4 kg | Schwefelsäure, |
| 10 kg | Natriumsulfat, |
| 3 kg | einer wässrigen Zubereitung, welche 20 % des gemäss Beispiel 7 hergestellten Maleinsäurehalbesters der Formel (17) und 40 % des Anlagerungsproduktes von 35 Mol Ethylenoxid an 1 Mol Nonylphenol enthält, und |
| 2 kg | des Farbstoffes<br>Acid Blue 155, C.I. 14880 |

enthält. Man beginnt bei 70°C mit dem Färben, lässt 10 Minuten bei dieser Temperatur zirkulieren, treibt innerhalb von 30 Minuten zum Kochen und hält das Färbebad 90 Minuten bei Kochtemperatur. Während des Färbeprozesses tritt kein störendes Schäumen auf. Hierauf wird das Bad abgekühlt und die Ware gespült und getrocknet. Man erhält eine egale blaue Färbung der Wolle.

**Beispiel 5**

In einem Stranggarn-Färbeapparat werden 100 kg Wollgarn bei 40°C in 1500 Litern Wasser eingenetzt. Hierauf werden folgende Zusätze zugegeben

| | |
|---|---|
| 0,5 kg | Essigsäure 80-%-ig |
| 10 kg | Natriumsulfat und |
| 1 kg | einer wässrigen Zubereitung, welche 35 % des gemäss Beispiel 10 hergestellten Maleinsäurehalbesters der Formel (20) und 30 % des Anlagerungsproduktes von 35 Mol Ethylenoxid an Sojaöl enthält. |

Man lässt die Flotte 15 Minuten zirkulieren und fügt 1 kg des Farbstoffes der Formel

(24)

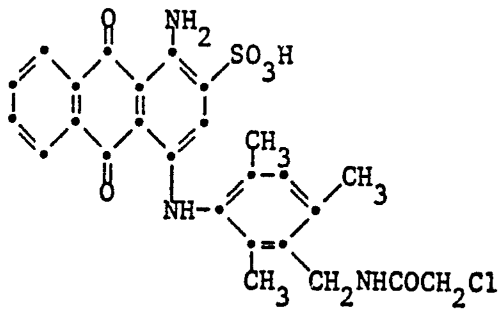

hinzu.

Die Färbeflotte wird dann in Verlaufe von 30 Minuten zum Kochen erwärmt und man färbt 30 Minuten bei dieser Temperatur. Während des ganzen Färbeprozesses tritt kein störendes Schäumen auf. Die Ware wird schliesslich gespült und getrocknet. Man erhält eine echte, brillante und egale blaue Färbung der Wolle.

**Patentansprüche**

1. Malein- oder Phthalsäurehalbester der Formel

(1)

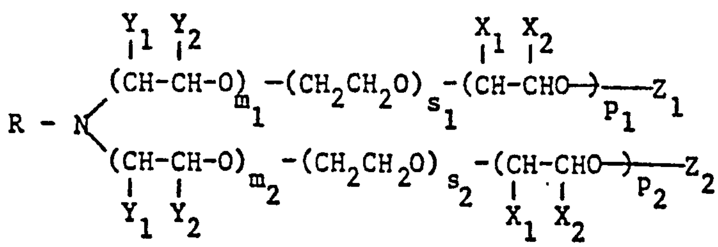

oder deren quaternäre Ammoniumverbindungen, worin
R einen aliphatischen Rest mit 12 bis 24 Kohlenstoffatomen,
von $Y_1$ und $Y_2$ eines Wasserstoff und das andere Phenyl,
von $X_1$ und $X_2$ eines Wasserstoff und das andere Methyl,
von $Z_1$ und $Z_2$ eines Wasserstoff und das andere den Maleinsäurerest oder den Phthalsäurerest,
$m_1$ und $m_2$ je 0 oder 1 und
$s_1$, $s_2$, $p_1$ und $p_2$ ganze Zahlen bedeuten,
worin die Summe von $s_1 + s_2$ 25 bis 50 und die Summe von $p_1 + p_2$ 4 bis 15 betragen.

2. Säurehalbester gemäss Anspruch 1, dadurch gekennzeichnet, dass in Formel (1) R einen aliphatischen Rest mit 14 bis 24 Kohlenstoffatomen bedeutet.

3. Säurehalbester gemäss Anspruch 1, dadurch gekennzeichnet, dass in Formel (1) R einen Alkyl- oder Alkenylrest mit 16 bis 24 Kohlenstoffatomen bedeutet.

4. Säurehalbester gemäss Anspruch 1, dadurch gekennzeichnet, dass in Formel (1) R Behenyl bedeutet.

5. Säurehalbester gemäss einem der Ansprüche 1 bis 4, dadurch gekennzeichnet, dass in Formel (1) $m_1$ und $m_2$ 0 sind oder von $m_1$ und $m_2$ nur eines 1 ist.

6. Säurehalbester gemäss einem der Ansprüche 1 bis 5, dadurch gekennzeichnet, dass in Formel (1) von $Z_1$ und $Z_2$ eines Wasserstoff und das andere der Maleinsäurerest ist.

7. Säurehalbester gemäss einem der Ansprüche 1 bis 6, dadurch gekennzeichnet, dass in Formel (1) die Summe von $s_1 + s_2$ 30 bis 40 ist.

8. Säurehalbester gemäss einem der Ansprüche 1 bis 7, dadurch gekennzeichnet, dass in Formel (1) die

Summe von $p_1 + p_2$ 6 bis 12 ist.

9. Säurehalbester gemäss Anspruch 1, dadurch gekennzeichnet, dass sie der Formel

(2)

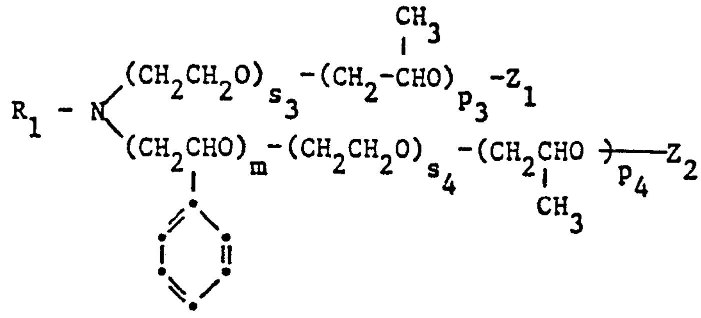

entsprechen, worin

$R_1$ Alkyl oder Alkenyl je mit 16 bis 24 Kohlenstoffatomen,

von $Z_1$ und $Z_2$ eines Wasserstoff und das andere den Maleinsäurerest oder den Phthalsäurerest,

m 0 oder 1 und

$s_3$, $s_4$, $p_3$ und $p_4$ ganze Zahlen bedueten,

wobei die Summe von $s_3 + s_4$ 30 bis 40 und die Summe von $p_3 + p_4$ 5 bis 12 betragen.

10. Säurehalbester gemäss Anspruch 1, dadurch gekennzeichnet, dass sie der Formel

(3)

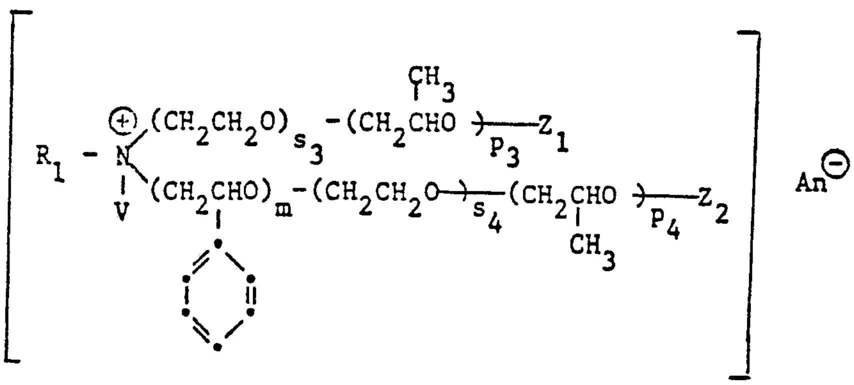

entsprechen, worin

$R_1$ Alkyl oder Alkenyl je mit 16 bis 24 Kohlenstoffatomen,

V Alkyl mit 1 bis 4 Kohlenstoffatomen, Hydroxyalkyl mit 2 bis 4 Kohlenstoffatomen, Carbamoylmethyl oder Benzyl,

von $Z_1$ und $Z_2$ eines Wasserstoff und das andere den Maleinsäurerest oder den Phthalsäurerest,

$An^{\ominus}$ das Anion einer anorganischen oder organischen Säure,

m 0 oder 1 und $s_3$, $s_4$, $p_3$ und $p_4$ ganze Zahlen, bedeuten, wobei die Summe von $s_3 + s_4$ 30 bis 40 und die Summe von $p_3 + p_4$ 5 bis 12 betragen.

11. Säurehalbester gemäss Anspruch 10, dadurch gekennzeichnet, dass in Formel (3) V Methyl oder Benzyl bedeutet.

12. Säurehalbester gemäss einem der Ansprüche 9 bis 11, dadurch gekennzeichnet, dass in Formel (2) oder (3) von $Z_1$ und $Z_2$ eines Wasserstoff und das andere der Maleinsäurerest ist.

13. Säurehalbester gemäss einem der Ansprüche 9 bis 12, dadurch gekennzeichnet, dass in Formel (2) oder (3) $R_1$ Behenyl bedeutet.

14. Verwendung der Säurehalbester gemäss einem der Ansprüche 1 bis 13 als Hilfsmittel beim Färben von wollhaltigem Fasermaterial mit anionischen Farbstoffen.

15. Verfahren zum Färben von wollhaltigen Fasermaterialien mit anionischen Farbstoffen, dadurch gekennzeichnet, dass man diese Materialien vor oder während des Färbens mit einer wässerigen Zubereitung behandelt, welche einen Säurehalbester der Formel

(1)

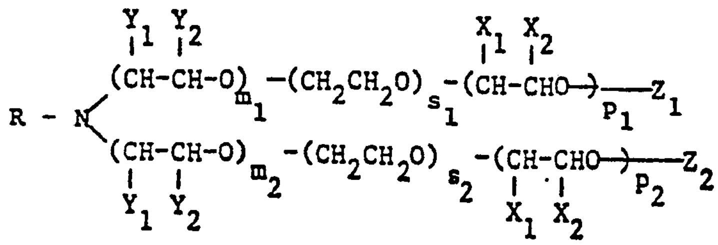

oder deren quaternäre Ammoniumverbindungen enthält, worin
R einen aliphatischen Rest mit 12 bis 24 Kohlenstoffatomen,
von $Y_1$ und $Y_2$ eines Wasserstoff und das andere Phenyl,
von $X_1$ und $X_2$ eines Wasserstoff und das andere Methyl,
von $Z_1$ und $Z_2$ eines Wasserstoff und das andere den Maleinsäurerest oder den Phthalsäurerest,
$m_1$ und $m_2$ je 0 oder 1 und
$s_1$, $s_2$, $p_1$ und $p_2$ ganze Zahlen bedeuten,
worin die Summe von $s_1 + s_2$ 25 bis 50 und die Summe von $p_1 + p_2$ 4 bis 15 betragen.

16. Verfahren gemäss Anspruch 15 dadurch gekennzeichnet, dass die Zubereitung zusätzlich ein Anlagerungsprodukt von 30 bis 200 Mol Ethylenoxid an 1 Mol eines aliphatischen Monoalkohols mit 12 bis 22 Kohlenstoffatomen oder eines Alkylphenols mit 4 bis 12 Kohlenstoffatomen im Alkylteil enthält.

17. Verfahren gemäss Anspruch 15, dadurch gekennzeichnet, dass die Zubereitung zusätzlich ein Anlagerungsprodukt von 30 bis 100 Mol Ethylenoxid an 1 Mol eines aliphatischen Monoalkohols mit 12 bis 22 Kohlenstoffatomen enthält.

18. Verfahren gemäss einem der Ansprüche 15 bis 17, dadurch gekennzeichnet, dass das Färbebad 0,5 bis 5 Gewichtsprozent an Zubereitung, bezogen auf das Fasermaterial, enthält.

19. Verfahren gemäss einem der Ansprüche 15 bis 18, dadurch gekennzeichnet, dass das Färbebad 0,2 bis 2 Gewichtsprozent Maleinsäure- oder Phthalsäurehalbester, bezogen auf das Fasermaterial, enthält.

20. Verfahren gemäss einem der Ansprüche 15 bis 19, dadurch gekennzeichnet, dass man Reaktivfarbstoffe, die mindestens zwei Sulfonsäuregruppen enthalten, verwendet.

21. Verfahren gemäss einem der Ansprüche 15 bis 19, dadurch gekennzeichnet, dass man 1 : 2-Metallkomplexfarbstoffe verwendet.

22. Verfahren gemäss einem der Ansprüche 15 bis 20, dadurch gekennzeichnet, dass man eine einzige Sulfonsäuregruppe aufweisende 1 : 2-Chrommischkomplexe von Azofarbstoffen verwendet.

23. Verfahren gemäss einem der Ansprüche 15 bis 19, dadurch gekennzeichnet, dass man Reaktivfarbstoffe, die mindestens zwei Sulfonsäuregruppen aufweisen in Kombination mit 1 : 2-Metallkomplexfarbstoffen verwendet.

**Claims**

1. A maleic or phthalic acid half ester of the formula

(1)

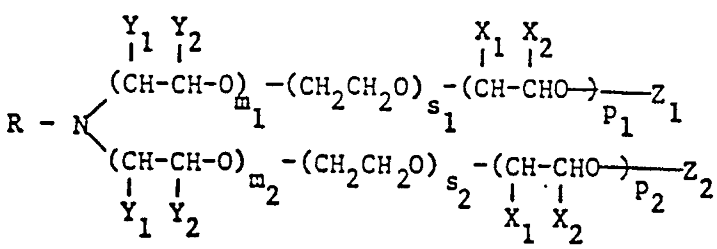

or a quaternary ammonium compound thereof, in which
R is an aliphatic radical of 12 to 24 carbon atoms,
one of $Y_1$ and $Y_2$ is hydrogen and the other is phenyl,
one of $X_1$ and $X_2$ is hydrogen and the other is methyl,
one of $Z_1$ and $Z_2$ is hydrogen and the other is the maleic acid radical or the phthalic acid radical,
$m_1$ and $m_2$ are each 0 or 1, and $s_1$, $s_2$, $p_1$ and $p_2$ are integers, the sum of $s_1 + s_2$ being 25 to 50 and the sum of $p_1 + p_2$ being 4 to 15.

2. An acid half ester according to claim 1, wherein R in formula (1) is an aliphatic radical of 14 to 24 carbon atoms.

3. An acid half ester according to claim 1, wherein R in formula (1) is an alkyl or alkenyl radical, each of 16 to 24 carbon atoms.

4. An acid half ester according to claim 1, wherein R in formula (1) is behenyl.

5. An acid half ester according to any one of claims 1 to 4, wherein $m_1$ and $m_2$ in formula (1) are 0 or only one of $m_1$ and $m_2$ is 1.

6. An acid half ester according to any one of claims 1 to 5, wherein one of $Z_1$ and $Z_2$ in formula (1) is hydrogen and the other is the maleic acid radical.

7. An acid half ester according to any one of claims 1 to 6, wherein the sum of $s_1 + s_2$ in formula (1) is 30 to 40.

8. An acid half ester according to any one of claims 1 to 7, wherein the sum of $p_1 + p_2$ in formula (1) is 6 to 12.

9. An acid half ester according to claim 1 of the formula

(2)

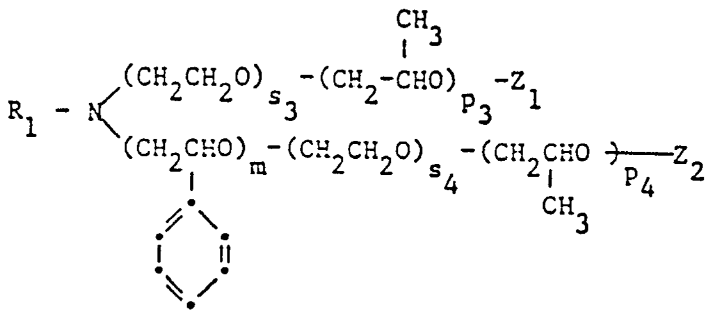

in which
$R_1$ is alkyl or alkenyl, each of 16 to 24 carbon atoms,
one of $Z_1$ and $Z_2$ is hydrogen and the other is the maleic acid radical or the phthalic acid radical,
m is 0 or 1 and
$s_3$, $s_4$, $p_3$ and $p_4$ are integers, the sum of $s_3 + s_4$ being 30 to 40 and the sum of $p_3 + p_4$ being 5 to 12.

10. An acid half ester according to claim 1 of the formula

(3)

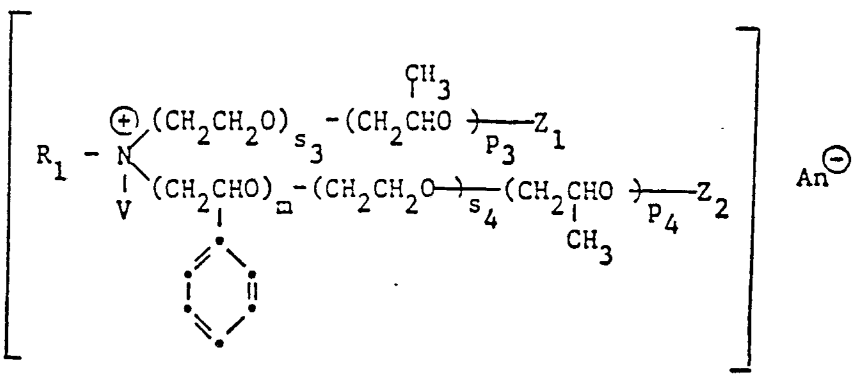

in which
$R_1$ is alkyl or alkenyl, each of 16 to 24 carbon atoms,
V is alkyl of 1 to 4 carbon atoms, hydroxyalkyl of 2 to 4 carbon atoms, carbamoylmethyl or benzyl,
one of $Z_1$ and $Z_2$ is hydrogen and the other is the maleic acid radical or phthalic acid radical,
$An^{\ominus}$ is the anion of an inorganic or organic acid,
m is 0 or 1 and
$s_3$, $s_4$, $p_3$ and $p_4$ are integers, the sum of $s_3 + s_4$ being 30 to 40 and the sum of $p_3 + p_4$ being 5 to 12.

11. An acid half ester according to claim 10, wherein V in formula (3) is methyl or benzyl.

12. An acid half ester according to any one of claims 9 to 11, wherein one of $Z_1$ and $Z_2$ in formula (2) or (3) is hydrogen and the other is the maleic acid radical.

13. An acid half ester according to any one of claims 9 to 12, wherein $R_1$ in formula (2) or (3) is behenyl.

14. Use of an acid half ester according to any one of claims 1 to 13 as an assistant in the dyeing of wool-containing fibre material with anionic dyes.

15. A process for dyeing wool-containing fibre material with anionic dyes, which comprises treating this material, before or during dyeing with an aqueous formulation which contains an acid half ester of formula

(1) 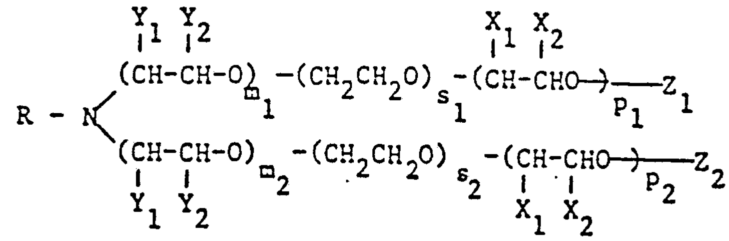

or a quaternary ammonium compound thereof, in which
R is an aliphatic radical of 12 to 24 carbon atoms,
one of $Y_1$ and $Y_2$ is hydrogen and the other is phenyl,
one of $X_1$ and $X_2$ is hydrogen and the other is methyl,
one of $Z_1$ and $Z_2$ is hydrogen and the other is the maleic acid radical or the phthalic acid radical,
$m_1$ and $m_2$ are 0 or 1, and
$s_1$, $s_2$, $p_1$ and $p_2$ are integers, the sum of $s_1 + s_2$ being 25 to 50 and the sum of $p_1 + p_2$ being 4 to 15.

16. A process according to claim 15, wherein the formulation additionally contains an adduct of 30 to 200 moles of ethylene oxide and 1 mole of an aliphatic monoalcohol of 12 to 22 carbon atoms or of an alkylphenol containing 4 to 12 carbon atoms in the alkyl moiety.

17. A process according to claim 15, wherein the formulation additionally contains an adduct of 30 to 100 moles of ethylene oxide and 1 mole of an aliphatic monoalcohol of 12 to 22 carbon atoms.

18. A process according to any one of claims 15 to 17, wherein the dyebath contains 0.5 to 5 % by weight of the formulation, based on the fibre material.

19. A process according to any one of claims 15 to 18, wherein the dyebath contains 0.2 to 2 % by weight of maleic or phthalic acid half ester, based on the fibre material.

20. A process according to any one of claims 15 to 19, which comprises the use of a reactive dye which contains at least two sulfonic acid groups.

21. A process according to any one of claims 15 to 19, which comprises the use of a 1 : 2 metal complex dye.

22. A process according to any one of claims 15 to 20, which comprises the use of a 1 : 2 chromium mixed complex of an azo dye which complex contains one single sulfonic acid group.

23. A process according to any one of claims 15 to 19, which comprises the use of a reactive dye which contains at least two sulfonic acid groups in conjunction with a 1 : 2 metal complex dye.

**Revendications**

1. Hémiesters de l'acide maléique ou de l'acide phtalique répondant à la formule

(1) 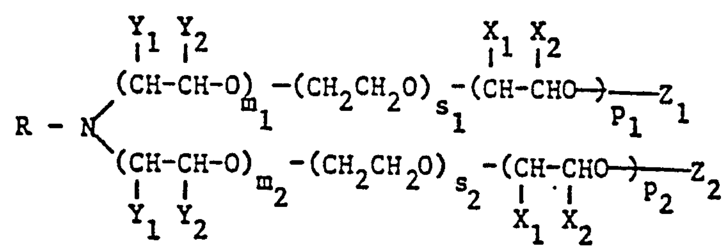

ou leurs dérivés ammonium quaternaires, dans lesquels
R représente un radical aliphatique comportant de 12 à 24 atomes de carbone,
l'un des symboles $Y_1$ et $Y_2$ représente un hydrogène et l'autre un phényle,
l'un des symboles $X_1$ et $X_2$ représente un hydrogène et l'autre un méthyle,
l'un des symboles $Z_1$ et $Z_2$ représente un hydrogène et l'autre le radical de l'acide maléique ou le radical de l'acide phtalique,
$m_1$ et $m_2$ valent chacun 0 ou 1, et
$s_1$, $s_2$, $p_1$ et $p_2$ sont des nombres entiers,
la somme $s_1 + s_2$ valant de 25 à 50 et la somme $p_1 + p_2$ de 4 à 15.

2. Hémiesters d'acide selon la revendication 1, caractérisés en ce que, dans la formule 1, R représente un radical aliphatique comportant de 14 à 24 atomes de carbone.

3. Hémiesters d'acide selon la revendication 1, caractérisés en ce que, dans la formule (1) R représente un groupe alkyle ou alcényle comportant de 16 à 24 atomes de carbone.

4. Hémiesters d'acide selon la revendication 1, caractérisés en ce que, dans la formule (1), R représente le groupe béhényle.

5. Hémiesters d'acide selon l'une des revendications 1 à 4, caractérisés en ce que dans la formule (1), $m_1$ et

$m_2$ valent 0, ou bien un seul parmi $m_1$ et $m_2$ vaut 1.

6. Hémiesters d'acide selon l'une des revendications 1 à 5, caractérisés en ce que, dans la formule (1), l'un de $Z_1$ et $Z_2$ représente un hydrogène et l'autre le radical de l'acide maléique.

7. Hémiesters d'acide selon l'une des revendications 1 à 6, caractérisés en ce que, dans la formule (1), la somme $s_1 + s_2$ vaut de 30 à 40.

8. Hémiesters d'acide selon l'une des revendications 1 à 7, caractérisés en ce que, dans la formule (1), la somme $p_1 + p_2$ vaut de 6 à 12.

9. Hémiesters d'acide selon la revendication 1, caractérisés en ce qu'ils correspondent à la formule

(2) 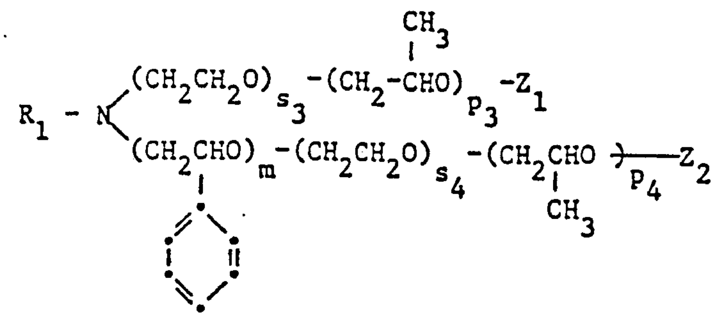

dans laquelle

$R_1$ représente un groupe alkyle ou alcényle, comportant dans chaque cas de 16 à 24 atomes de carbone,

l'un des symboles $Z_1$ et $Z_2$ représente un hydrogène et l'autre le radical de l'acide maléique ou le radical de l'acide phtalique,

m vaut 0 ou 1, et

$s_3$, $s_4$, $p_3$ et $p_4$ sont des nombres entiers, la somme $s_3 + s_4$ valant de 30 à 40 et la somme $p_3 + p_4$ valant de 5 à 12.

10. Hémiesters d'acide selon la revendication 1, caractérisés en ce qu'ils correspondent à la formule

(3) 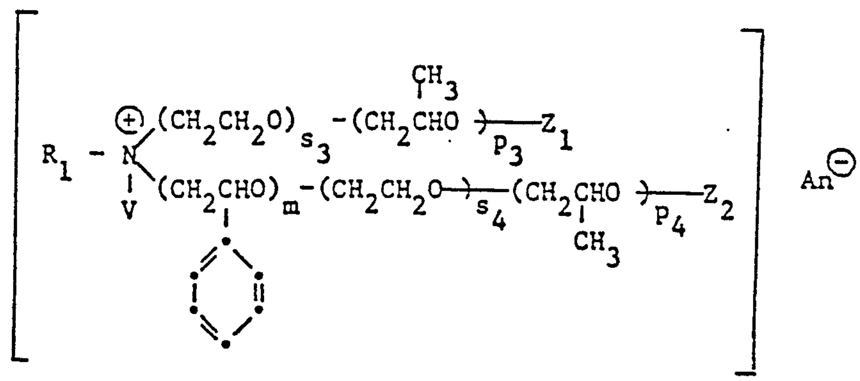

dans laquelle

$R_1$ représente un groupe alkyle ou alcényle, comportant dans chaque cas de 16 à 24 atomes de carbone,

V représente un groupe alkyle comportant de 1 à 4 atomes de carbone, hydroxyalkyle comportant de 2 à 4 atomes de carbone, carbamoylméthyle ou benzyle,

l'un des symboles $Z_1$ et $Z_2$ représente un hydrogène et l'autre le radical de l'acide maléique ou le radical de l'acide phtalique,

$An^{\ominus}$ représente l'anion d'un acide minéral ou organique,

m vaut 0 ou 1 et

$s_3$, $s_4$, $p_3$ et $p_4$ sont des nombres entiers, la somme $s_3 + s_4$ valant de 30 à 40 et la somme $p_3 + p_4$ valant de 5 à 12.

11. Hémiesters d'acide selon la revendication 10, caractérisés en ce que, dans la formule (3), V représente un groupe méthyle ou benzyle.

12. Hémiesters d'acide selon l'une des revendications 9 à 11, caractérisés en ce que, dans la formule (2) ou (3) l'un des symboles $Z_1$ et $Z_2$ représente un hydrogène et l'autre le radical de l'acide maléique.

13. Hémiesters d'acide selon l'une des revendications 9 à 12, caractérisés en ce que, dans la formule (2) ou (3), $R_1$ représente le radical béhényle.

14. Utilisation des hémiesters d'acide selon l'une des revendications 1 à 13, en tant que produits auxiliaires dans la teinture de matières fibreuses contenant de la laine par des colorants anioniques.

15. Procédé pour teindre des matières fibreuses contenant de la laine à l'aide de colorants anioniques, caractérisé en ce que l'on traite ces matières, avant ou pendant la teinture, par une composition aqueuse contenant un hémiester d'acide de formule

(1)

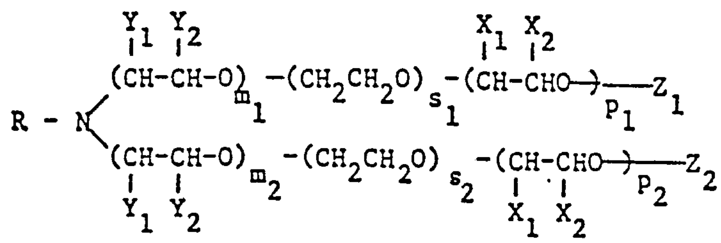

ou son dérivé ammonium quaternaire, dans lequel

R représente un radical aliphatique, comportant de 12 à 24 atomes de carbone,

l'un des symboles $Y_1$ et $Y_2$ représente un hydrogène et l'autre un phényle, l'un des symboles $X_1$ et $X_2$ représente un hydrogène et l'autre un méthyle,

l'un des symboles $Z_1$ et $Z_2$ représente un hydrogène et l'autre le radical de l'acide maléique ou le radical de l'acide phtalique,

$m_1$ et $m_2$ valent chacun 0 ou 1, et

$s_1$, $s_2$, $p_1$ et $p_2$ sont des nombres entiers, la somme $s_1 + s_2$ valant de 25 à 50 et la somme $p_1 + p_2$ valant de 4 à 15.

16. Procédé selon la revendication 15, caractérisé en ce que la composition contient en outre un produit d'addition de 30 à 200 moles d'oxyde d'éthylène sur 1 mole d'un monoalcool aliphatique comportant de 12 à 22 atomes de carbone, ou d'un alkylphénol comportant de 4 à 12 atomes de carbone dans le fragment alkyle.

17. Procédé selon la revendication 15, caractérisé en ce que la composition contient en outre un produit d'addition de 30 à 100 moles d'oxyde d'éthylène sur 1 mole d'un monoalcool aliphatique comportant de 12 à 22 atomes de carbone.

18. Procédé selon l'une des revendications 15 à 17, caractérisé en ce que le bain de teinture contient de 0,5 à 5 % en poids de la composition, par rapport à la matière fibreuse.

19. Procédé selon l'une des revendications 15 à 18, caractérisé en ce que le bain de teinture contient de 0,2 à 2 % en poids d'hémiester de l'acide maléique ou de l'acide phtalique, par rapport à la matière fibreuse.

20. Procédé selon l'une des revendications 15 à 19, caractérisé en ce que l'on utilise des colorants réactifs contenant au moins deux groupes acide sulfonique.

21. Procédé selon l'une des revendications 15 à 19, caractérisé en ce que l'on utilise des colorants à complexe métallique 1 : 2.

22. Procédé selon l'une des revendications 15 à 20, caractérisé en ce que l'on utilise des complexes mixtes de chrome 1 : 2 de colorants azoïques, ne comportant qu'un seul groupe acide sulfonique.

23. Procédé selon l'une des revendications 15 à 19 caractérisé en ce que l'on utilise des solvants réactifs contenant au moins deux groupes acide sulfonique, en combinaison avec des colorants à complexe métallique 1 : 2.